# EUROPEAN PATENT SPECIFICATION

(11) **EP 1 433 592 B1**
(45) Date of publication and mention of the grant of the patent: **06.02.2008**
(21) Application number: 03104948.9
(22) Date of filing: 23.12.2003
(51) Int. Cl.: B29D 30/52

(54) **Method and system for producing a spliceless tread ring of cured elastomeric material for assembly to a tire carcass**
System und Verfahren zum Herstellen eines Laufflächenrings aus elastomerem Material
Procédé et système de production d'une bande annulaire de roulement en matériau élastomère

(30) Priority: 24.12.2002 IT TO20021123
(43) Date of publication of application: 30.06.2004
(73) Proprietor: Marangoni Tread S.p.A., 03013 Ferentino (IT)
(72) Inventor: Marangoni, Mario, 38068, Rovereto (IT); Magistrale, Vitantonio, 03100 Frosinone (IT)
(74) Representative: Jorio, Paolo

(56) References cited:
- EP-A- 0 825 014
- FR-A- 1 234 593
- US-A- 3 829 271
- US-A- 3 963 393
- US-A- 3 994 653
- US-A- 5 354 406

## Description

The present invention relates to a method and system for producing a spliceless tread ring of cured elastomeric material for assembly to a tire carcass.

In Patent US-3 994 653, cured tread rings are produced using a centripetal press, in which a central mold core, having a substantially cylindrical outer surface, is fitted in rotary and axially sliding manner to a fixed outer annular curing mold comprising a number of segments, and a number of actuating devices, each fitted to a respective segment to move the segment, radially with respect to a longitudinal axis of rotation of the mold core, between an open position and a closed molding and curing position. The mold core is movable axially, with respect to the annular curing mold, between a molding and curing work position, in which the mold core is located inside the annular curing mold, and an extracted position, in which the mold core receives, directly on its cylindrical outer surface from an extruder outlet, a strip of elastomeric material which, following a complete turn of the mold core, and after the strip is cut and the ends spliced, defines a ring of green elastomeric material which can be cured directly inside the centripetal press by moving the mold core axially into the work position.

One drawback of using the centripetal press described in Patent US3994653 lies in the resulting tread rings being spliced, i.e. intrinsically featuring structural irregularities.

EP1201397A1 discloses an apparatus for making a very thin unvulcanized rubber tape having a finished thickness in a range of from 0.3 to 1.5 mm and comprising : an extruder comprising a passage for unvulcanized rubber defining an outlet for the extruded unvulcanized rubber; and a pair of calender rollers disposed near said outlet for adjusting the thickness of the extruded unvulcanized rubber passing therebetween.

It is an object of the present invention to improve the known centripetal press described above, and the way in which it is used, to provide a method and system for producing a spliceless tread ring of cured elastomeric material for assembly to a tire carcass, which method and system are cheap and easy to implement, and at the same time produce spliceless tread rings.

According to the present invention, there is provided a method and system for producing a spliceless tread ring of cured elastomeric material for assembly to a tire carcass, as claimed in the respective Claims 1 and 16.

Particular embodiments of the invention are the subject of the dependent claims.

A number of non-limiting examples of the present invention will be described with reference to the accompanying drawings, in which:
Figure 1 shows a schematic plan view, with parts removed for clarity, of a preferred embodiment of the system for producing tread rings according to the present invention;
Figure 2 shows a schematic axial section of a first detail of the Figure 1 system;
Figure 3 shows a schematic view in perspective of a second detail of the Figure 1 system;
Figure 4 shows a schematic side view of a third detail of the Figure 1 system;
Figure 5 shows a schematic, partly sectioned view in perspective of a tread ring produced on the Figure 1 system equipped with the Figure 4 detail;
Figure 6 shows a variation of the Figure 4 detail;
Figure 7 shows a schematic, partly sectioned view in perspective of a tread ring produced on the Figure 1 system equipped with the Figure 6 detail.

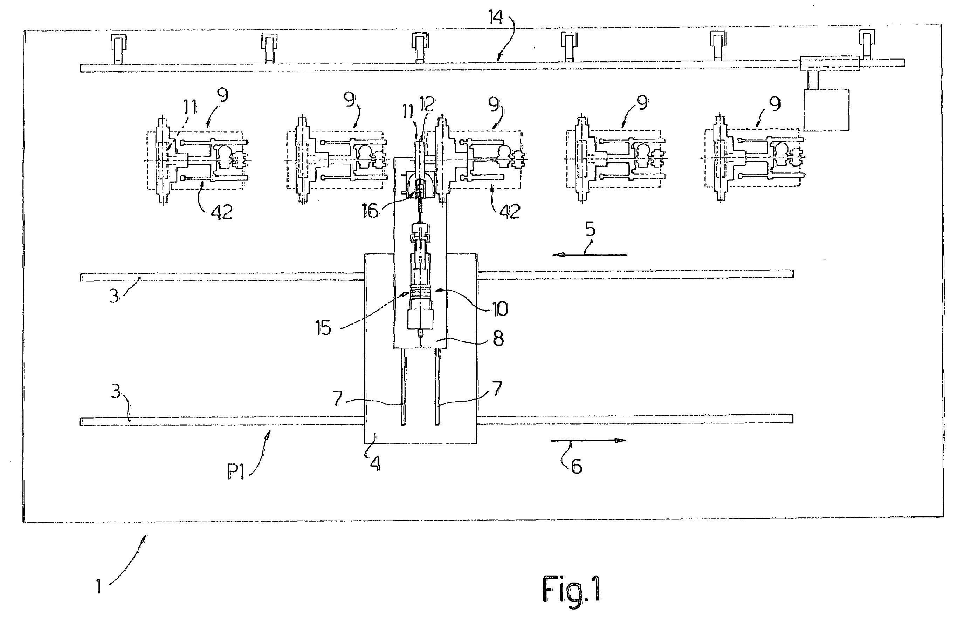

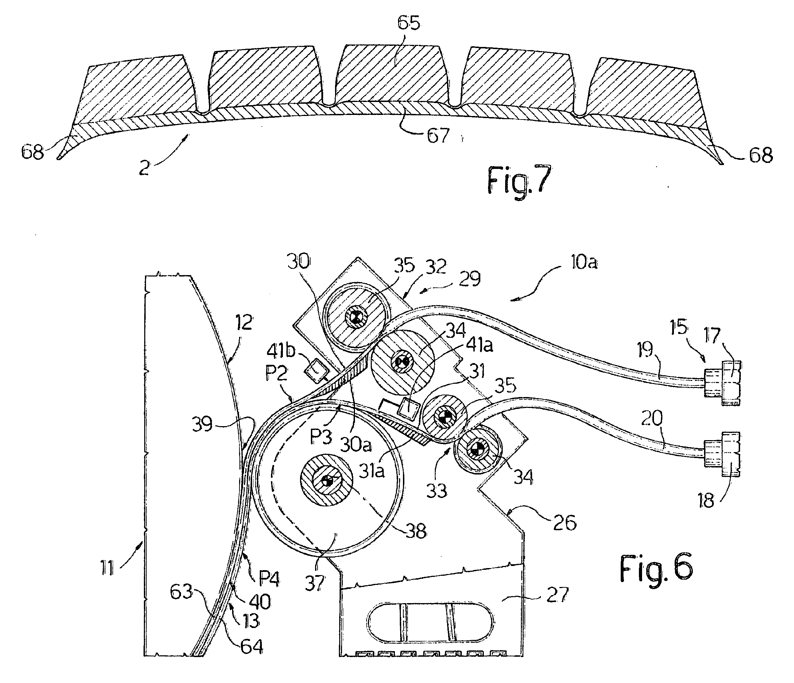

Number 1 in Figure 1 indicates as a whole a system for producing tread rings 2 (Figures 5 and 7) of cured elastomeric material.

System 1 comprises two rails 3 defining a path P1 for a powered truck 4, which performs, along rails 3, a forward work run in a direction 5, and a return run in an opposite direction 6 to direction 5. That is, path P1 is in the form of an endless path, a work portion of which, traveled in direction 5, coincides with a return portion traveled in direction 6.

Truck 4 is fitted with a further two rails 7 extending crosswise to rails 3 and supporting a further powered truck 8, which moves along rails 7 between a withdrawn rest position (not shown) on truck 4, and an extracted work position, in which truck 8 projects outwards of rails 3.

System 1 also comprises a number of molding and curing stations 9 equally spaced along rails 3, on the side of rails 3 on which truck 8, in the extracted work position, projects with respect to truck 4.

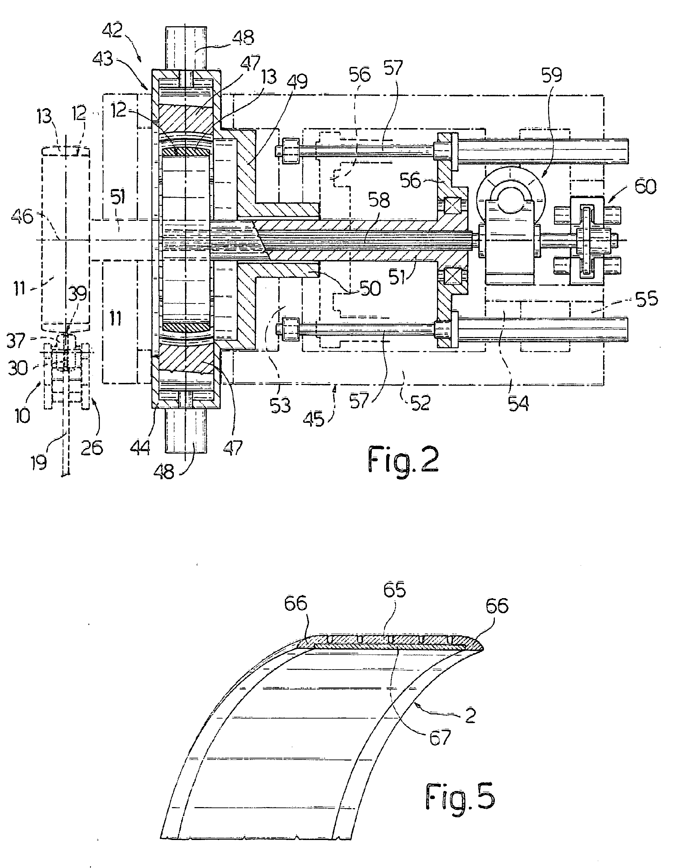

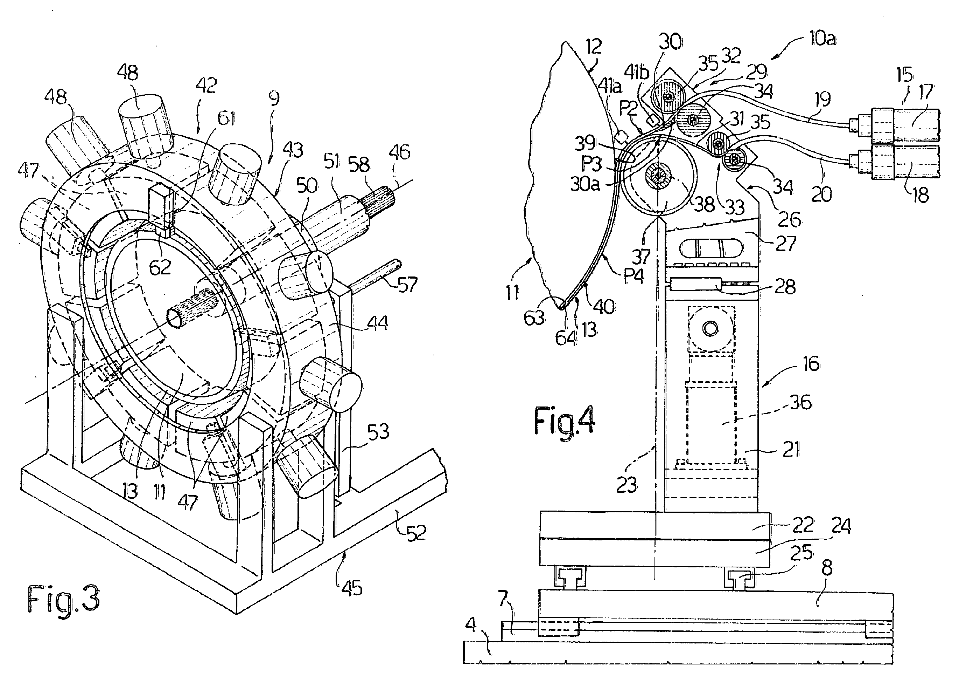

System 1 also comprises a forming unit 10 supported on truck 8, and which is arrested selectively by truck 8 at each work station 9 to cooperate, in that position, with a forming support 11 forming part of the relative work station 9 and having a substantially cylindrical outer surface 12, and to hot form a ring 13 (Figures 2 and 4) of green elastomeric material directly on outer surface 12 of forming support 11.

Finally, system 1 comprises a conveying unit 14 extending parallel to rails 3, on the opposite side of work stations 9 to rails 3, to receive and carry off the tread rings 2 produced at work stations 9.

As shown in Figures 1 and 4, forming unit 10 is substantially defined by a forming machine 10a comprising an extrusion unit 15 mounted in a fixed position on truck 8, crosswise to rails 3, and for forming green elastomeric material, and a turret 16 located to the front of extrusion unit 15. In the example shown, extrusion unit 15 comprises two superimposed extrusion heads 17 and 18 (supplied by respective extruders not shown) facing turret 16 and for producing respective continuous sections 19 and 20 of green elastomeric material from normally, though not necessarily, different mixes.

As shown more clearly in Figure 4, turret 16 comprises a hollow base 21 extending upwards from a powered turntable 22 (optional), which rotates about a vertical axis 23 and is supported on a powered truck 24 movable along two rails 25 fitted to truck 8 and parallel to rails 3. In the absence of turntable 22, turret 16 is supported directly on truck 24.

Turret 16 also comprises a top work head 26, in turn comprising a frame 27 connected to the top of base 21 with the interposition of a guide-slide coupling 28 enabling work head 26 to move, with respect to base 21, in a direction parallel to rails 7 and crosswise to axis 23. Frame 27 is fitted with a shaping unit 29 for receiving sections 19 and 20 and converting them into respective further sections 30 and 31 of given cross section. For which purpose, shaping unit 29 comprises two superimposed calenders 32 and 33 for receiving and shaping respective sections 19 and 20.

Each calender 32, 33 comprises a drive roller 34 and a driven roller 35, which are tangent to each other, are both powered (via a known transmission not shown) by a motor 36 housed vertically inside base 21, and are shaped laterally to define, in between, a channel of desired cross section, which is engaged at the input by relative section 19, 20, and supplies respective section 30, 31 at the output.

Work head 26 also comprises a substantially cylindrical applicator roller 37 fitted to frame 27 to rotate, with respect to frame 27, about an axis 38 parallel to rails 25, and which is also connected in known manner (not shown) to motor 36.

On leaving shaping unit 29, sections 30 and 31 are fed along respective paths P2 and P3 - of which at least path P2 is preferably defined by a guide 30a extending from shaping unit 29 - and, one on top of the other, onto the periphery of applicator roller 37, which applies them simultaneously, at an application point 39, onto outer surface 12 of forming support 11. In other words, paths P2 and P3 have a common end portion extending along the periphery of applicator roller 37, and enable the formation of a composite section 40 having an outer layer defined by section 31, and an inner layer defined by section 30, so that, as explained in more detail later on, a multilayer green ring 13 is gradually formed on forming support 11.

Work head 26 also comprises a cutting unit 41a cooperating with the periphery of applicator roller 37 along the common end portion of paths P2 and P3; and preferably, though not necessarily, a further cutting unit 41b located along the guide 30a defining path P2, and immediately upstream from applicator roller 37.

As shown in Figure 1, each forming support 11 is defined by the inner mold core (hereinafter also indicated 11) of a respective centripetal molding and curing press 42 substantially defining respective work station 9.

As shown more clearly in Figures 2 and 3, each centripetal press 42 comprises an annular curing mold 43, in turn comprising, in known manner, a toroidal body 44 supported in a fixed position on a base 45 and having an axis 46 parallel to rails 3, and a number of segments 47 fitted to toroidal body 44 and movable radially, with respect to toroidal body 44 and by respective actuators 48, between an open rest position and a closed molding and curing position. Toroidal body 44 is closed at the back by a bell 49 crosswise to axis 46 and having a central through sleeve 50 coaxial with axis 46 and projecting rearwards from a central portion of bell 49. An internally splined, tubular shaft 51 is fitted in rotary and axially sliding manner through sleeve 50, is coaxial with axis 46, and is fitted at the front end with mold core 11, the outer surface 12 of which is coaxial with axis 46.

As shown more clearly in Figure 2, base 45 comprises a rear portion projecting rearwards of toroidal body 44, and in turn comprising a base frame 52 resting on the floor, and three gantry-type uprights 53, 54, 55 arranged successively behind bell 49 and crosswise to axis 46. Sleeve 50 extends through upright 53, and the rear end of tubular shaft 51 between uprights 53 and 54 is connected in rotary and axially fixed manner to a cross member 56 moved between uprights 53 and 54 by jacks 57, which are connected integrally to upright 53, are connected in sliding manner to uprights 54 and 55, and move mold core 11 along axis 46 between an extracted forming position (shown by the dash line in Figure 2), in which mold core 11 is located to the front of annular mold 43 and completely outside toroidal body 44, and a central work position (shown by the continuous line in Figure 2), in which mold core 11 is housed inside annular mold 43, between segments 47.

A splined, axially fixed shaft 58 is fitted inside tubular shaft 51, is connected in axially sliding, angularly fixed manner to tubular shaft 51, and has a rear portion extending through a drive unit 59 fitted to upright 54 and for rotating splined shaft 58, and therefore mold core 11, about axis 46, and through a brake unit 60 fitted to upright 55 and for angularly locking splined shaft 58, and therefore mold core 11, in any given angular position about axis 46.

Along its front surface, toroidal body 44 has an "unseating" device 61 comprising a number of powered bolts 62 arranged about and radially with respect to axis 46, and movable, with respect to toroidal body 44, between an extracted work position, in which their free ends are substantially tangent to outer surface 12 of mold core 11, and a withdrawn rest position.

In actual use, when forming unit 10 is arrested at a work station 9, respective centripetal press 42 is set with segments 47 in the open position, and with mold core 11 in the extracted forming position. Once truck 4 is arrested, truck 8 is moved and guide-slide coupling 28 activated to bring applicator roller 37 of forming unit 10 (Figure 4) substantially into contact with outer surface 12, and so bring composite section 40 into contact with outer surface 12 at application point 39. At this point, extrusion unit 15 and drive unit 59 are operated simultaneously to rotate mold core 11 about axis 46 and wind composite section 40 about mold core 11. As extrusion unit 15 and drive unit 59 operate, truck 24 moves steadily along rails 25, so that application point 39 moves along a generating line of outer surface 12, composite section 40 is wound about mold core 11 along a substantially helical winding path P4, and green ring 13 is formed on mold core 11 within a given forming time, and comprises, as shown in Figure 4, an inner layer 63 defined by section 30, and an outer layer 64 defined by section 31.

Once green ring 13 is completed, drive unit 59 is stopped, brake unit 60 is activated to angularly lock mold core 11, and cutting unit 41a is activated to cut composite section 40 on the periphery of applicator roller 37, thus leaving forming unit 10 ready for the next application.

If only cutting unit 41a is provided, as in the above case, inner and outer layers 63 and 64 are the same width. If, however, both cutting units 41a and 41b are provided, cutting units 41a and 41b and the extruders (not shown) connected to respective extrusion heads 17 and 18 may be operated differently to obtain a green ring 13 (not shown) having an outer layer 64 (Figure 4) wider than inner layer 63, and which may be molded and cured to produce a tread ring 2 of the type shown in Figure 5, in which, outer layer 64, once cured, defines an annular tread strip 65, the shoulders 66 of which extend laterally outwards of an annular base strip 67 defined by cured inner layer 63.

In the Figure 6 variation, section 31 also has a guide 31a, and cutting unit 41a is moved to the output of guide 31a to cut section 31 only. In this way, differently operating cutting units 41a and 41b and the extruders (not shown) connected to respective extrusion heads 17 and 18 produces a green ring 13 (not shown) having an outer layer 64 narrower than inner layer 63, and which may be molded and cured to obtain a tread ring 2 of the type shown in Figure 7, in which, inner layer 63, once cured, defines an annular base strip 67, the shoulders 68 of which extend laterally outwards of an annular tread strip 65 defined by the cured outer layer 64.

At this point, truck 4 is operated to move forming unit 10 to the next work station 9, where the above cycle is repeated; and, at the same time, jacks 57 are operated to move mold core 11 axially into the central work position. Once mold core 11 is positioned, actuators 48 are operated to move segments 47 into the closed position to mold green ring 13, and segments 47 are kept in the closed position for a given curing time, long enough to form tread ring 2 of cured elastomeric material on mold core 11.

When curing is completed, segments 47 are moved back to the open position, and jacks 57 are operated to move mold core 11 back to the extracted position. During extraction, mold core 11 is first moved outwards past bolts 62 of unseating device 61 in the withdrawn position; after moving bolts 62 into the extracted position, mold core 11 is again moved towards toroidal body 44 to enable bolts 62 to engage tread ring 2 laterally and unseat it off mold core 11; and, after moving bolts 62 into the withdrawn position, mold core 11 is moved back into the extracted position ready for the next cycle.

Once unloaded off relative mold core 11, tread ring 2 is transferred, by a known transfer arm (not shown), to conveying unit 14, on which it is transferred to successive known finishing stations not shown.

The entire forming, molding, and curing cycle is repeated at each of work stations 9, which, to maximize the efficiency of system 1, are preferably of such a number that the sum of the respective forming times is at most equal to the curing time of each work station 9. In this way, after forming a green ring 13 in each of work stations 9 arranged successively along path P1, forming unit 10 can move back to the first work station 9 just as the relative tread ring 2 is being unloaded.

As will be clear from the foregoing description, at each work station 9, the relative green ring 13, once hot formed by extrusion unit 15 on mold core 11, is molded and cured immediately on mold core 11, without being removed, stored, or coated with liquid release agents.

Consequently, in addition to eliminating all the special machinery required to form green rings 13 according to the known art, and eliminating the storage space and use of pollutant liquid release agents, the forming heat (sections 30 and 31 are normally deposited on mold core 11 at a temperature close to 80-90°C) is also saved, thus substantially halving both normal curing energy consumption and curing time.

Moreover, not being unloaded off the forming supports defined by mold cores 11, the resulting green rings 13 are spliceless and perfectly circular, undergo no undesired deformation prior to curing, and retain none other than a circular shape memory.

Finally, by retaining its forming heat when inserted inside annular mold 43, each green ring 13 is hot molded, thus eliminating any local impairment or disruption of the original longitudinal equiorientation of its molecular chains produced by extrusion of relative sections 19 and 20.

Clearly, numerous changes may be made, either singly or in any combination, to system 1 as described herein without, however, departing from the scope of the present invention.

In particular, the number of work stations 9 may differ from that shown. Even only one work station 9 may be provided; in which case, rails 3 and truck 4 may be dispensed with.

At least two trucks 4 with respective forming units 10 may be provided along path P1 to increase the number of work stations 9 along path P1 or to form layers 63 and 64 in two successive runs. In which latter case, work heads 26 of the two forming units 10 would be fitted one with calender 32 and the other with calender 33.

In a variation (not shown) of system 1 described, the addition of a turntable (not shown) between truck 4 and rails 7 provides for turning rails 7 through 180° about a vertical axis, so that work stations 9 can be arranged on both sides of rails 3 to double the number of work stations 9 or, for a given number of work stations 9, to substantially halve the length of rails 3 and hence the overall size of system 1.

In a further variation (not shown) of system 1 described, the same result is obtained by replacing rails 3 and truck 4 with a turntable (not shown) rotating in steps about a vertical axis and supporting even more than one forming unit 10, and by arranging work stations 9 about the turntable axis.

As regards forming unit 10, it should be pointed out that one of the two calenders 32, 33 may be eliminated or left idle together with the relative extrusion head 17, 18 when producing a single-layer green ring 13.

Finally, in each work station 9, the devices described and illustrated for moving forming support 11 axially with respect to relative annular mold 43, for rotating forming support 11 about axis 46, and for angularly locking forming support 11, may obviously differ entirely, both mechanically and structurally, from those described.

## Claims

1. A method of producing a spliceless tread ring (2) of cured elastomeric material for assembly to a tire carcass; the method comprising the steps of:
extruding and calendering, employing forming means (10), at least one section (30; 31) of green elastomeric material of a given cross section;
winding said section (30; 31) hot onto a mold core (11) in an extracted position of a centripetal curing press (42) to gradually form, on the mold core (11), a spliceless ring (13) of green elastomeric material;
moving the mold core (11) from the extracted position to a work position, in which the mold core (11) is housed in an annular outer curing mold (43) of the centripetal curing press (42), which curing mold (43) has a longitudinal axis (46) and is defined by a number of segments (47), each movable radially, with respect to the longitudinal axis (46) and by a respective actuating device (48), between an open position and a closed molding and curing position; the inner mold core (11) is fitted in rotary manner to the curing mold (43), has a substantially cylindrical outer surface (12) coaxial with the longitudinal axis (46), and is movable along the longitudinal axis (46) between an extracted position and a work position central with respect to the curing mold (43); and
molding and curing said ring (13) of green elastomeric material on said mold core (11) in a work position for a given curing time to form said tread ring (2) of cured elastomeric material;
the method is **characterized by** comprising the further steps of:
employing a given number of said centripetal curing presses (42) located at respective work stations (9);
moving the forming means (10) cyclically along a path (P1) extending along said work stations (9); and
arresting the forming means (10) at each said work station (9) for a given forming time required to form a respective said ring (13) of green elastomeric material on the relative mold core (11); the centripetal curing presses (42) are of such a given number that the sum of the relative forming times at most equals said curing time.

2. A method as claimed in Claim 1, wherein said forming step comprises the substeps of:
setting said segments (47) to said open position, and said mold core (11) to said extracted position with said outer surface (12) facing an output of said forming means (10);
applying one end of said section (30; 31) to a given point of application (39) on said outer surface (12);
rotating the mold core (11) about said longitudinal axis (46), so as to take said section (30; 31) with it, and simultaneously activating said forming means (10) to continuously hot form said section (30; 31):
effecting a relative translation movement between said forming means (10) and said mold core (11) to move said point of application (39) along a generating line of said outer surface (12) to wind said section (30; 31) about said longitudinal axis (46) along a substantially helical winding path (P4) extending in contact with said outer surface (12), so as to gradually form said ring (13) of green elastomeric material on said outer surface (12); and
arresting rotation of the mold core (11), deactivating said forming means (10) and simultaneously cutting said section (30; 31).

3. A method as claimed in Claim 1 or 2, wherein said molding and curing step comprises the substeps of:
moving said mold core (11) axially into the work position; and
moving said segments (47) into the closed position to mold and cure said ring (13) of green elastomeric material for a given curing time, and obtain said tread ring (2) of cured elastomeric material.

4. A method as claimed in one of the foregoing Claims, and also comprising an unloading step, in turn comprising the substeps of:
moving said segments (47) into the open position, and said mold core (11) from the work position; and
unseating said tread ring (2) of cured elastomeric material off the mold core (11) by moving the mold core into the work position.

5. A method as claimed in one of Claims 2 to 4, wherein said forming means (10) comprise at least one forming machine (10a) having an output applicator device (37); and wherein said forming machine (10a) is positioned facing said outer surface (12) when said mold core (11) is in the extracted position; said forming machine (10a) comprising an extrusion unit (15) for continuously producing at least one respective first section (19; 20) of green elastomeric material, and a shaping unit (29) for converting said first section (19; 20) into a second section (30; 31) having a cross section of given shape and size; and said applicator device (37) continuously hot depositing said second section (30; 31), as it is formed, onto said outer surface (12) at said point of application (39).

6. A method as claimed in one of Claims 2 to 5, wherein said relative movement is effected by moving at least said applicator device (37) with respect to said mold core (11) and parallel to said longitudinal axis (46).

7. A method as claimed in one of the foregoing Claims, wherein said ring (13) of green elastomeric material comprises at least two superimposed layers (63, 64) of respective green elastomeric materials, and is formed by hot depositing, onto said outer surface (12) and for each said layer (63; 64), a respective section (30; 31) of a respective said green elastomeric material; each said section (30; 31) being wound about said longitudinal axis (46) along a respective substantially helical winding path (P4).

8. A method as claimed in Claim 7, wherein each said section (30; 31) is produced continuously by a respective extruding device (17; 18), and is fed continuously to said mold core (11) along a respective feed path (P2; P3).

9. A method as claimed in Claim 8, wherein each said feed path (P2; P3) extends through a respective calender (32; 33) for imparting a cross section of given shape and size to the relative said section (30; 31).

10. A method as claimed in one of Claims 7 to 9, wherein said superimposed layers (63, 64) are produced successively.

11. A method as claimed in one of Claims 7 to 9, wherein said superimposed layers (63, 64) are produced, at least partly, simultaneously.

12. A method as claimed in Claims 2 and 11, wherein said feed paths (P2, P3) are superimposed, and have a common portion tangent to said outer surface (12) at said point of application (39); said sections (30, 31) being fed, at least partly, simultaneously along the relative said feed paths (P2, P3) to form, along said common portion, a composite section (40) defined by said sections (30, 31) superimposed and contacting each other.

13. A method as claimed in any one of the foregoing Claims, wherein said path (P1) is an endless path.

14. A method as claimed in Claim 13, wherein said path (P1) comprises a work portion extending along said work stations (9); and a return portion.

15. A method as claimed in Claim 14, wherein said work portion and said return portion coincide with each other.

16. A system for producing a spliceless tread ring (2) of cured elastomeric material for assembly to a tire carcass; the system comprising:
a centripetal curing press (42) comprising a fixed outer annular curing mold (43), which has a longitudinal axis (46) and comprises a number of segments (47) and a number of actuating devices (48), each connected to a respective said segment (47) to move the segment (47), radially with respect to said longitudinal axis (46), between an open position and a closed molding and curing position; and a mold core (11) coaxial with said longitudinal axis (46), having a substantially cylindrical outer surface (12), and fitted to said annular curing mold (43) to rotate about said longitudinal axis (46) and to translate along said longitudinal axis (46) between an extracted position and a work position central with respect to said annular curing mold (43);
forming means (10) for extruding and calendering at least one section (30; 31) of green elastomeric material of a given cross section and winding said section (30; 31) hot onto the outer surface (12) of the mold core (11) in the extracted position to gradually form, on the mold core (11), a spliceless ring (13) of green elastomeric material;
first actuating means (57) for moving the mold core (11) axially from the extracted position to the work position, in which the mold core (11) is housed in the annular outer curing mold (43) of the centripetal curing press (42) for molding and curing said ring (13) of green elastomeric material on said mold core (11) for a given curing time to form said tread ring (2) of cured elastomeric material; and
braking means (60) for releasably locking said mold core (11) in a given angular position with respect to said annular outer curing mold (43) of the centripetal curing press (42);
the system is **characterized by** comprising:
a given number of said centripetal curing presses (42) located at respective work stations (9); and
movable supporting means (4) for moving the forming means (10) cyclically along a path (P1) extending along said work stations (9) and for arresting the forming means (10) at each said work station (9) for a given forming time required to form a respective said ring (13) of green elastomeric material on the relative mold core (11); the centripetal curing presses (42) are of such a given number that the sum of the relative forming times at most equals said curing time.

17. A system as claimed in Claim 16, wherein said forming means (10) comprise at least one forming machine (10a) having an output positioned facing said outer surface (12) when said mold core (11) is in the extracted position; said forming machine (10a) comprising an extrusion unit (15) for continuously producing at least one first section (19; 20) of green elastomeric material, a shaping unit (29) for calendering said first section (19; 20) into a second section (30; 31) having a cross section of given shape and size, and an applicator device (37) for continuously hot depositing said second section (30; 31), as it is formed, onto said outer surface (12) at a point of application (39); moving means (24) being provided for moving said point of application (39) continuously along a generating line of said outer surface (12) during operation of second actuating means (59) for rotating said mold core (11) about said longitudinal axis (46), so that said second section (30; 31) winds about said outer surface (12) along a substantially helical winding path (P4).

18. A system as claimed in Claim 17, wherein said forming machine (10a) comprises at least a first and a second extruding device (17, 18), and said extrusion unit (15) comprises at least a first and a second shaping device (32, 33) associated respectively with said first and said second extruding device (17, 18) to produce a respective said first section (19; 20) and then a respective said second section (30; 31) for supply to said applicator device (37) along respective feed paths (P2, P3).

19. A system as claimed in Claim 18, wherein said feed paths (P2, P3) are superimposed, and have a common portion at said applicator device (37) to enable the formation, along said common portion, of a composite section (40) defined by said two second sections (30, 31) superimposed and contacting each other.

20. A system as claimed in any Claim 16 to 19, wherein said path (P1) is an endless path.

21. A system as claimed in Claim 20, wherein said path (P1) comprises a work portion extending along said work stations (9); and a return portion.

22. A system as claimed in Claim 21, wherein said work portion and said return portion coincide with each other.

## Patentansprüche

1. Verfahren zur Herstellung eines nicht gespleißten Laufflächenrings (2) aus ausgehärtetem elastomeren Material zum Zusammensetzen zu einer Reifenkarkasse, wobei das Verfahren die Schritte umfasst:
Extrudieren und Kalandrieren, unter Verwendung von Formmitteln (10), wenigstens eines Abschnitts (30; 31) aus rohem elastomeren Material mit einem vorgegebenen Querschnitt,
Heißwickeln dieses Abschnitts (30; 31) auf einen Formkern (11) in einer ausgezogenen Stellung einer zentripetalen Härtepresse (42), um schrittweise einen nicht gespleißten Ring (13) aus rohem elastomeren Material auf dem Formkern (11) zu formen,
Bewegen des Formkerns (11) von der ausgezogenen Stellung in eine Arbeitsstellung, in der der Formkern (11) in einer ringförmigen äußeren Aushärteform (43) der zentripetalen Härtepresse (42) beherbergt ist, wobei die Aushärteform (43) eine Längsachse (46) hat und durch eine Anzahl von Segmenten (47) begrenzt ist, wovon jedes radial in Bezug auf die Längsachse (46) und durch eine entsprechende Betätigungsvorrichtung (48) zwischen einer offenen Stellung und einer geschlossenen Form- und Aushärtstellung bewegbar ist; wobei der innere Formkern (11) drehbar an der Aushärteform (43) befestigt ist, eine im Wesentlichen zylindrische Außenfläche (12) koaxial zur Längsachse (46) hat, und entlang der Längsachse (46) zwischen einer ausgezogenen Stellung und einer in Bezug auf die Aushärteform (43) mittigen Arbeitsstellung bewegbar ist, und
Formen und Aushärten des Rings (13) aus rohem elastomeren Material auf dem Formkern (11) in einer Arbeitsstellung über eine vorbestimmte Aushärtezeit, um den Laufflächenring (2) aus ausgehärtetem elastomeren Material zu bilden, wobei das Verfahren **dadurch gekennzeichnet ist, dass** es die weiteren Schritte umfasst:
Verwenden einer vorgegebenen Anzahl an zentripetalen Härtepressen (42), die an entsprechenden Arbeitsstationen (9) angeordnet sind;
Bewegen der Formmittel (10) zyklisch entlang einem Pfad (P1), der entlang den Arbeitsstationen (9) verläuft, und
Arretieren der Formmittel (10) an jeder Arbeitsstation (9) für eine vorbestimmte Zeit, die erforderlich ist, um einen entsprechenden Ring (13) aus rohem elastomeren Material auf dem jeweiligen Formkern (11) zu formen, wobei die vorbestimmte Anzahl an zentripetalen Härtepressen (42) dergestalt ist, dass die Summe der relativen Formzeiten höchstens gleich der Aushärtezeit ist.

2. Verfahren nach Anspruch 1, wobei der Formschritt die Unterschritte umfasst:
Einstellen der Segmente (47) auf die offene Stellung und des Formkerns (11) auf die ausgezogenen Stellung, bei der die Außenfläche (12) einer Ausgabe der Formmittel (10) zugewandt ist,
Aufbringen eines Endes des Abschnitts (30, 31) auf einen vorgegebenen Auftragspunkt (39) auf die Außenfläche (12), Drehen des Formkerns (11) um die Längsachse (46), um den Abschnitt (30, 31) mit sich zu nehmen, und gleichzeitiges Aktivieren der Formmittel (10) zum kontinuierlichen Heißformen des Abschnitts (30, 31),
Bewirken einer relativen Translationsbewegung zwischen den Formmitteln (10) und dem Formkern (11), um den Auftragspunkt (39) entlang einer erzeugenden Line der Außenfläche (12) zu bewegen, um den Abschnitt (30, 31) um die Längsachse (46) entlang eines sich im Wesentlichen spiralförmig windenden Pfads (P4), der in Kontakt mit der Außenfläche (12) verläuft, zu wickeln, um den Ring (13) aus rohem elastomeren Material auf der Außenfläche (12) schrittweise zu formen, und
Arretieren der Drehung des Formkerns (11), Deaktivieren der Formmittel (10) und gleichzeitiges Schneiden des Abschnitts (30, 31).

3. Verfahren nach einem der Ansprüche 1 oder 2, wobei der Form- und Aushärtschritt die Unterschritte umfasst:
Bewegen des Formkerns (11) axial in die Arbeitsstellung, und
Bewegen der Segmente (47) in die geschlossenen Stellung, um den Ring (13) aus rohem elastomeren Material über eine vorgegebene Aushärtezeit zu formen und auszuhärten, und den Laufflächenring (2) aus ausgehärtetem elastomeren Material zu erzielen.

4. Verfahren nach einem der vorhergehenden Ansprüche und ferner umfassend einen Entladeschritt, der wiederum die Unterschritte umfasst:
Bewegen der Segmente (47) in die offene Stellung und den Formkern (11) von der Arbeitsstellung, und
Abheben des Laufflächenrings (2) aus ausgehärtetem elastomeren Material vom Formkern (11) durch Bewegen des Formkerns in die Arbeitsstellung.

5. Verfahren nach einem der Ansprüche 2 bis 4, wobei die Formmittel (10) wenigstens eine Formmaschine (10a) mit einer Ausgabeauftragsvorrichtung (37) umfassen, und wobei die Formmaschine (10a) der Außenfläche (12) zugewandt angeordnet ist, wenn der Formkern (11) in der ausgezogenen Stellung ist, wobei die Formmaschine (10a) eine Extrusionseinheit (15) zum kontinuierlichen Herstellen wenigstens eines entsprechenden ersten Abschnitts (19, 20) aus rohem elastomeren Material umfasst und eine Formgestaltungseinheit (29), um den ersten Abschnitt (19, 20) in einen zweiten Abschnitt (30, 31) umzuwandeln, der einen Querschnitt von vorgegebener Form und Größe hat, wobei die Auftragsvorrichtung (37) den zweiten Abschnitt (30, 31), wenn er geformt wird, kontinuierlich auf die Außenfläche (12) an dem Auftragspunkt (39) heiß aufbringt.

6. Verfahren nach einem der Ansprüche 2 bis 5, wobei die Relativbewegung durch Bewegen wenigstens der Auftragsvorrichtung (37) in Bezug auf den Formkern (11) und parallel zur Längsachse (46) bewirkt wird.

7. Verfahren nach einem der vorhergehenden Ansprüche, wobei der Ring (13) aus rohem elastomeren Material wenigstens zwei übereinanderliegende Schichten (63, 64) aus entsprechenden rohen elastomeren Materialien umfasst, und **dadurch** gebildet wird, dass auf die Außenfläche (12), und für jede Schicht (63, 64), ein entsprechender Abschnitt (30, 31) eines entsprechenden rohen elastomeren Materials heiß aufgebracht wird, wobei jeder Abschnitt (30, 31) um die Längsachse (46) entlang eines entsprechenden im Wesentlichen spiralförmig gewundenen Pfads (P4) gewickelt ist.

8. Verfahren nach Anspruch 7, wobei jeder Abschnitt (30, 31) kontinuierlich durch eine Extrusionsvorrichtung (17, 18) produziert wird, und kontinuierlich dem Formkern (11) entlang eines entsprechenden Zuführpfads (P2, P3) zugeführt wird.

9. Verfahren nach Anspruch 8, wobei sich jeder Zuführpfad (P2, P3) durch einen entsprechenden Kalander (32, 33) erstreckt, um einen Querschnitt vorgegebener Form und Größe auf den jeweiligen Abschnitt (30, 31) zu übertragen.

10. Verfahren nach einem der Ansprüche 7 bis 9, wobei die übereinander gelagerten Schichten (63, 64) nacheinander hergestellt werden.

11. Verfahren nach einem der Ansprüche 7 bis 9, wobei die übereinander gelagerten Schichten (63, 64) zumindest teilweise gleichzeitig hergestellt werden.

12. Verfahren nach Anspruch 2 und 11, wobei die Zuführpfade (P2, P3) übereinander gelagert sind und einen gemeinsamen die Außenfläche (12) am Auftragspunkt (39) tangierenden Teil haben, wobei die Abschnitte (30, 31) zumindest teilweise entlang den relativen Zuführpfaden (P2, P3) gleichzeitig zugeführt werden, um entlang dem gemeinsamen Teil einen Verbundabschnitt (40) zu bilden, der von den übereinander gelagerten, sich gegenseitig berührenden Abschnitten (30, 31) definiert ist.

13. Verfahren nach einem der vorhergehenden Ansprüche, wobei der Pfad (P1) ein Endlospfad ist.

14. Verfahren nach Anspruch 13, wobei der Pfad (P1) einen Arbeitsabschnitt umfasst, der entlang den Arbeitsstationen (9) verläuft, sowie einen Umkehrabschnitt.

15. Verfahren nach Anspruch 14, wobei der Arbeitsabschnitt und der Umkehrabschnitt zusammenfallen.

16. System zur Herstellung eines nicht gespleißten Laufflächenrings aus ausgehärtetem elastomeren Material zum Zusammensetzen zu einer Reifenkarkasse, wobei das System umfasst:
eine zentripetale Härtepresse (42) umfassend eine feste ringförmige Aushärteform (43), die eine Längsachse (46) hat und eine Anzahl an Segmenten (47) und eine Anzahl an Betätigungsvorrichtungen (48) umfasst, die jeweils mit einem entsprechenden Segment (47) verbunden sind, um das Segment (47) radial in Bezug auf die Längsachse (46) zwischen einer offenen Stellung und einer geschlossenen Form- und Aushärtstellung zu bewegen; sowie einen Formkern (11) koaxial zur Längsachse (46), der eine im Wesentlichen zylindrische Außenfläche (12) aufweist und an der ringförmigen Aushärteform (43) befestigt ist, um um die Längsachse (46) zu rotieren und um entlang der Längsachse (46) zwischen einer ausgezogenen Stellung und einer in Bezug auf die ringförmige Aushärteform (43) mittige Arbeitsstellung zu übersetzen,
Formmittel (10) zum Extrudieren und Kalandrieren wenigstens eines Abschnitts (20, 31) aus rohem elastomeren Material mit einem vorgegebenen Querschnitt und Heißwickeln des Abschnitts (30; 31) auf eine Außenfläche (12) des Formkerns (11) in der ausgezogenen Stellung, um auf dem Formkern (11) schrittweise einen nicht gespleißten Ring (13) aus rohem elastomeren Material zu formen,
erste Betätigungsmittel (57) zum axialen Bewegen des Formkerns (11) von der ausgezogenen Stellung zur Arbeitsstellung, in der der Formkern (11) in der ringförmigen äußeren Aushärteform (43) der zentripetalen Härtepresse (42) beherbergt ist, um den Ring (13) aus rohem elastomeren Material auf dem Formkern (11) für eine vorbestimmte Aushärtezeit zu formen und auszuhärten, um den Laufflächenring (2) aus ausgehärtetem elastomeren Material zu bilden, und Bremsmittel (60) zum lösbaren Feststellen des Formkerns (11) in einer vorgegebenen Winkelstellung in Bezug auf die ringförmige äußere Aushärteform (43) der zentripetalen Härtepresse (42),
wobei das System **dadurch gekennzeichnet ist, dass** es umfasst:
eine vorgegebenen Anzahl an zentripetalen Härtepressen (42), die an entsprechenden Arbeitsstationen (9) angeordnet sind, und
bewegliche Stützmittel (4), um die Formmittel (10) zyklisch entlang eines Pfads (P1) zu bewegen, der sich entlang den Arbeitsstationen (9) erstreckt, und um die Formmittel (10) an jeder Arbeitsstation (9) für eine vorgegebene Zeit festzustellen, die erforderlich ist, um einen entsprechenden Ring (13) aus rohem elastomeren Material auf dem jeweiligen Formkern (11) zu formen, wobei die vorbestimmte Anzahl an zentripetalen Härtepressen (42) dergestalt ist, dass die Summe der relativen Formzeiten höchstens gleich der Aushärtezeit ist.

17. System nach Anspruch 16, wobei die Formmittel (10) wenigstens eine Formmaschine (10a) umfassen, die einen Ausgang hat, der der Außenfläche (12) zugewandt ist, wenn sich der Formkern (11) in der ausgezogenen Stellung befindet, wobei die Formmaschine (10a) eine Extrusionseinheit (15) zum kontinuierlichen Herstellen von wenigstens einem ersten Abschnitt (19, 20) aus rohem elastomeren Material umfasst, eine Formgestaltungseinheit (29), um den ersten Abschnitt (19, 20) in einen zweiten Abschnitt (30, 31) umzuwandeln, der einen Querschnitt von vorgegebener Form und Größe hat, und eine Auftragsvorrichtung (37), um den zweiten Abschnitt (30, 31), wenn er geformt wird, kontinuierlich auf die Außenfläche (12) an dem Auftragspunkt (39) heiß aufzubringen, wobei Bewegungsmittel (24) vorgesehen sind, um den Auftragspunkt (39) kontinuierlich entlang einer erzeugenden Linie der Außenfläche (12) während des Betriebs der zweiten Betätigungsmittel (59) zum Drehen des Formkerns (11) um die Längsachse (46) zu bewegen, so dass sich der zweite Abschnitt (30, 31) entlang einem im Wesentlichen spiralförmig gewundenen Pfad (P4) um die Außenfläche (12) wickelt.

18. System nach Anspruch 17, wobei die Formmaschine (10a) wenigstens eine erste und eine zweite Extrusionsvorrichtung (17, 18) umfasst, und die Extrusionseinheit (15) wenigstens eine erste und eine zweite Formgestaltungsvorrichtung (32, 33) umfasst, die jeweils mit der ersten und der zweiten Extrusionsvorrichtung (17, 18) verbunden ist, um einen entsprechenden ersten Abschnitt (19, 20) und dann einen entsprechenden zweiten Abschnitt (30, 31) zum Zuführen zur Auftragsvorrichtung (37) entlang entsprechender Zuführpfade (P2, P3) herzustellen.

19. System nach Anspruch 18, wobei die Zuführpfade (P2, P3) übereinander gelagert sind und einen gemeinsamen Abschnitt an der Auftragsvorrichtung (37) haben, um entlang des gemeinsamen Abschnitts die Bildung eines Verbundabschnitts (40) zu ermöglichen, der durch die zwei Abschnitte (30, 31), die übereinander gelagert sind und sich gegenseitig berühren, begrenzt ist.

20. System nach einem der Ansprüche 16 bis 19, wobei der Pfad (P1) ein Endlospfad ist.

21. System nach Anspruch 20, wobei der Pfad (P1) einen Arbeitsabschnitt, der sich entlang der Arbeitsstationen (9) erstreckt, und einen Umkehrabschnitt umfasst.

22. System nach Anspruch 21, wobei der Arbeitsabschnitt und der Umkehrabschnitt zusammenfallen.

## Revendications

1. Procédé de production d'une bande annulaire de roulement sans raccord (2) d'un matériau élastomère vulcanisé, destinée à être assemblée sur une carcasse de pneu ; le procédé comprenant les étapes consistant à :
extruder et calandrer, à l'aide de moyens de formation (10), au moins une section (30 ; 31) de matériau élastomère cru d'une section transversale donnée ;
enrouler ladite section (30; 31) à chaud sur un noyau de moule (11) se trouvant dans une position extraite d'une presse à vulcaniser centripète (42), de façon à former progressivement, sur le noyau de moule (11), une bande annulaire sans raccord (13) de matériau élastomère cru ;
déplacer le noyau de moule (11) de la position extraite à une position de travail, dans laquelle le noyau de moule (11) est logé dans un moule de vulcanisation externe annulaire (43) de la presse à vulcaniser centripète (42), lequel moule de vulcanisation (43) a un axe longitudinal (46) et est défini par plusieurs segments (47), qui peuvent chacun être déplacés dans la direction radiale par rapport à l'axe longitudinal (46), et par un dispositif d'actionnement respectif (48), entre une position ouverte et une position fermée de moulage et de vulcanisation ; le noyau de moule interne (11) est monté de façon rotative dans le moule de vulcanisation (43), a une surface externe essentiellement cylindrique (12) coaxiale à l'axe longitudinal (46), et peut être déplacée le long de l'axe longitudinal (46) entre une position extraite et une position de travail, centrale par rapport au moule de vulcanisation (43) ; et
mouler et vulcaniser ladite bande annulaire (13) de matériau élastomère cru sur ledit noyau de moule (11) se trouvant dans une position de travail, pendant un temps de vulcanisation donné, pour former ladite bande annulaire de roulement (2) de matériau élastomère vulcanisé;
le procédé est **caractérisé en ce qu'**il comprend les étapes supplémentaires consistant à :
utiliser un nombre donné desdites presses à vulcaniser centripètes (42) disposées au niveau de postes de travail respectifs (9) ;
déplacer les moyens de formation (10) de manière cyclique le long d'une trajectoire (P1) s'étendant le long desdits postes de travail (9) ; et
arrêter les moyens de formation (10) au niveau de chacun desdits postes de travail (9) pendant un temps de formation donné requis, pour former une bande annulaire respective (13) de matériau élastomère cru sur le noyau de moule respectif (11) ; les presses à vulcaniser centripètes (42) étant prévues en un nombre donné tel que la somme des temps de formation relatifs soit au maximum égale audit temps de vulcanisation.

2. Procédé selon la revendication 1, dans lequel ladite étape de formation comprend les sous-étapes consistant à :
placer lesdits segments (47) à ladite position ouverte, et ledit noyau de moule (11) à ladite position extraite, avec ladite surface externe (12) en regard d'un orifice de sortie desdits moyens de formation (10) ;
appliquer une extrémité de ladite section (30; 31) sur un point d'application donné (39) sur ladite surface externe (12) ;
faire tourner le noyau de moule (11) autour dudit axe longitudinal (46), de façon à ce qu'il entraîne ladite section (30 ; 31) avec lui, et activer simultanément lesdits moyens de formation (10) afin de former ladite section (30 ; 31) à chaud et de manière continue ;
effectuer un mouvement de translation relatif entre lesdits moyens de formation (10) et ledit noyau de moule (11) de façon à déplacer ledit point d'application (39) le long d'une ligne de génération de ladite surface externe (12), afin d'enrouler ladite section (30 ; 31) autour dudit axe longitudinal (46), le long d'une trajectoire d'enroulement essentiellement hélicoïdale (P4) s'étendant en contact avec ladite surface externe (12), de façon à former progressivement ladite bande annulaire (13) de matériau élastomère cru sur ladite surface externe (12) ; et
arrêter la rotation du noyau de moule (11), désactiver lesdits moyens de formation (10) et couper simultanément ladite section (30 ; 31).

3. Procédé selon la revendication 1 ou 2, dans lequel ladite étape de moulage et de vulcanisation comprend les sous-étapes consistant à :
déplacer ledit noyau de moule (11) axialement jusqu'à la position de travail ; et
déplacer lesdits segments (47) jusqu'à la position fermée pour mouler et vulcaniser ladite bande annulaire (13) de matériau élastomère cru pendant un temps de vulcanisation donné, et obtenir ladite bande annulaire de roulement (2) de matériau élastomère vulcanisé.

4. Procédé selon l'une quelconque des revendications précédentes, et comprenant également une étape de déchargement, qui comprend, quant à elle, les sous-étapes consistant à :
déplacer lesdits segments (47) jusqu'à la position ouverte, et ledit noyau de moule (11) depuis la position de travail ; et
extraire ladite bande annulaire de roulement (2) de matériau élastomère vulcanisé du noyau de moule (11) en déplaçant le noyau de moule jusqu'à la position de travail.

5. Procédé selon l'une des revendications 2 à 4, dans lequel lesdits moyens de formation (10) comprennent au moins une machine de formation (10a) ayant un dispositif applicateur de sortie (37) ; et dans lequel ladite machine de formation (10a) est positionnée en regard de ladite surface externe (12) lorsque ledit noyau de moule (11) se trouve dans la position extraite ; ladite machine de formation (10a) comprenant une unité d'extrusion (15) pour produire en continu au moins une première section respective (19 ; 20) de matériau élastomère cru, et une unité de galbage (29) pour convertir ladite première section (19; 20) en une deuxième section (30 ; 31) ayant une section transversale de forme et de dimension données ; et ledit dispositif applicateur (37) déposant ladite deuxième section (30 ; 31) à chaud et de manière continue, au fur et à mesure qu'elle est formée, sur ladite surface externe (12), au niveau dudit point d'application (39).

6. Procédé selon l'une quelconque des revendications 2 à 5, dans lequel ledit déplacement relatif est effectué en déplaçant au moins ledit dispositif applicateur (37) par rapport audit noyau de moule (11) et parallèlement audit axe longitudinal (46).

7. Procédé selon l'une quelconque des revendications précédentes, dans lequel ladite bande annulaire (13) de matériau élastomère cru comprend au moins deux couches superposées (63, 64) de matériaux élastomères crus respectifs, et est formée par dépôt à chaud, sur ladite surface externe (12) et pour chacune desdites couches (63 ; 64), d'une section respective (30; 31) dudit matériau élastomère cru respectif; chacune desdites sections (30 ; 31) étant enroulée autour dudit axe longitudinal (46), le long d'une trajectoire d'enroulement essentiellement hélicoïdale respective (P4).

8. Procédé selon la revendication 7, dans lequel chacune desdites sections (30 ; 31) est produite en continu par un dispositif d'extrusion respectif (17 ; 18) et est amenée en continu jusqu'audit noyau de moule (11) le long d'une trajectoire d'acheminement respective (P2 ; P3).

9. Procédé selon la revendication 8, dans lequel chacune desdites trajectoires de d'acheminement (P2 ; P3) s'étend à travers une calandre respective (32; 33) destinée à donner une section transversale de forme et de dimension données à ladite section relative (30 ; 31).

10. Procédé selon l'une quelconque des revendications 7 à 9, dans lequel lesdites couches superposées (63, 64) sont produites l'une après l'autre.

11. Procédé selon l'une quelconque des revendications 7 à 9, dans lequel lesdites couches superposées (63, 64) sont produites, au moins partiellement, simultanément.

12. Procédé selon les revendications 2 et 11, dans lequel lesdites trajectoires d'acheminement (P2, P3) sont superposées, et ont une partie commune tangente à ladite surface externe (12) au niveau dudit point d'application (39) ; lesdites sections (30, 31) étant amenées, au moins partiellement, simultanément le long desdites trajectoires d'acheminement relatives (P2, P3) pour former, le long de ladite partie commune, une section composite (40) définie par lesdites sections (30, 31) superposées et en contact l'une avec l'autre.

13. Procédé selon l'une quelconque des revendications précédentes, dans lequel ladite trajectoire (P1) est une trajectoire sans fin.

14. Procédé selon la revendication 13, dans lequel ladite trajectoire (P1) comprend une partie de travail s'étendant le long desdits postes de travail (9) ; et une partie de retour.

15. Procédé selon la revendication 14, dans lequel ladite partie de travail et ladite partie de retour coïncident l'une avec l'autre.

16. Système de production d'une bande annulaire de roulement sans raccord (2) d'un matériau élastomère vulcanisé, destinée à être assemblée sur une carcasse de pneu ; le système comprenant :
une presse à vulcaniser centripète (42) comprenant un moule de vulcanisation annulaire externe fixe (43), qui dispose d'un axe longitudinal (46) et qui comprend un certain nombre de segments (47) et un certain nombre de dispositifs d'actionnement (48), étant chacun connectés à un segment respectif (47), pour déplacer ledit segment (47) dans la direction radiale par rapport audit axe longitudinal (46), entre une position ouverte et une position fermée de moulage et de vulcanisation ; et un noyau de moule (11) coaxial audit axe longitudinal (46), ayant une surface externe essentiellement cylindrique (12), et monté sur ledit moule de vulcanisation annulaire (43) de façon à tourner autour dudit axe longitudinal (46) et à se déplacer en translation le long dudit axe longitudinal (46) entre une position extraite et une position de travail, centrale par rapport au moule de vulcanisation annulaire (43) ;
des moyens de formation (10) destinés à extruder et calandrer au moins une section (30 ; 31) de matériau élastomère cru d'une section transversale donnée et enrouler ladite section (30 ; 31) à chaud sur la surface externe (12) du noyau de moule (11) se trouvant dans la position extraite, de façon à former progressivement, sur le noyau de moule (11), une bande annulaire sans raccord (13) de matériau élastomère cru ;
des premiers moyens d'actionnement (57) pour déplacer le noyau de moule (11) axialement de la position extraite à la position de travail, dans laquelle le noyau de moule (11) est logé dans le moule de vulcanisation externe annulaire (43) de la presse à vulcaniser centripète (42), pour mouler et vulcaniser ladite bande annulaire (13) de matériau élastomère cru sur ledit noyau de moule (11), pendant un temps de vulcanisation donné, pour former ladite bande annulaire de roulement (2) de matériau élastomère vulcanisé ; et
des moyens de freinage (60) pour verrouiller de manière réversible ledit noyau de moule (11) dans une position angulaire donnée par rapport audit moule de vulcanisation externe annulaire (43) de la presse à vulcaniser centripète (42) ;
le système est **caractérisé en ce qu'**il comprend :
un nombre donné desdites presses à vulcaniser centripètes (42) disposées au niveau de postes de travail respectifs (9) ; et
des moyens de support mobiles (4) pour déplacer les moyens de formation (10) de manière cyclique le long d'une trajectoire (P1) s'étendant le long desdits postes de travail (9) et pour arrêter les moyens de formation (10) au niveau de chacun desdits postes de travail (9) pendant un temps de formation donné requis, pour former une bande annulaire respective (13) de matériau élastomère cru sur le noyau de moule respectif (11) ; les presses à vulcaniser centripètes (42) étant prévues en un nombre donné tel que la somme des temps de formation relatifs soit au maximum égale audit temps de vulcanisation.

17. Système selon la revendication 16, dans lequel lesdits moyens de formation (10) comprennent au moins une machine de formation (10a) ayant un orifice de sortie positionné face à ladite surface externe (12) lorsque ledit noyau de moule (11) se trouve dans la position extraite ; ladite machine de formation (10a) comprenant une unité d'extrusion (15) pour produire en continu au moins une première section (19 ; 20) de matériau élastomère cru, une unité de galbage (29) pour calandrer ladite première section (19 ; 20) en une deuxième section (30 ; 31) ayant une section transversale de forme et de dimension données, et un dispositif applicateur (37) pour déposer ladite deuxième section (30 ; 31) à chaud et de manière continue, au fur et à mesure qu'elle est formée, sur ladite surface externe (12), au niveau d'un point d'application (39) ; des moyens de déplacement (24) étant prévus pour déplacer ledit point d'application (39) en continu le long d'une ligne de génération de ladite surface externe (12) pendant le fonctionnement des deuxièmes moyens d'actionnement (59) servant à faire tourner ledit noyau de moule (11) autour dudit axe longitudinal (46), de telle sorte que ladite deuxième section (30 ; 31) s'enroule autour de ladite surface externe (12) le long d'une trajectoire d'enroulement essentiellement hélicoïdale (P4).

18. Système selon la revendication 17, dans lequel ladite machine de formation (10a) comprend au moins un premier et un deuxième dispositifs d'extrusion (17, 18), et ladite unité d'extrusion (15) comprend au moins un premier et un deuxième dispositifs de galbage (32, 33) associés respectivement audit premier et audit deuxième dispositifs d'extrusion (17, 18), pour produire une première section respective (19 ; 20), puis une deuxième section respective (30 ; 31), à amener audit dispositif applicateur (37) le long de trajectoires d'acheminement respectives (P2, P3).

19. Système selon la revendication 18, dans lequel lesdites trajectoires d'acheminement (P2, P3) sont superposées, et ont une partie commune au niveau dudit dispositif applicateur (37) pour permettre la formation, le long de ladite partie commune, d'une section composite (40) définie par lesdites deux secondes sections (30, 31) superposées et en contact l'une avec l'autre.

20. Système selon l'une quelconque des revendications 16 à 19, dans lequel ladite trajectoire (P1) est une trajectoire sans fin.

21. Système selon la revendication 20, dans lequel ladite trajectoire (P1) comprend une partie de travail s'étendant le long desdits postes de travail (9) ; et une partie de retour.

22. Système selon la revendication 21, dans lequel la partie de travail et ladite partie de retour coïncident l'une avec l'autre.
